# EUROPEAN PATENT SPECIFICATION

(11) **EP 3 714 990 B1**
(45) Date of publication and mention of the grant of the patent: **15.03.2023**
(21) Application number: 20152940.1
(22) Date of filing: 21.01.2020
(51) Int. Cl.: B05B 12/00, B05B 1/30

(54) **VALVE DEVICE**
VENTILVORRICHTUNG
DISPOSITIF DE VALVE

(30) Priority: 26.03.2019 BR 202019005915 U
(43) Date of publication of application: 30.09.2020
(73) Proprietor: Guarany Indústria e Comércio Ltda., 13308-200 Itu (BR)
(72) Inventor: FLEURY BELLANDI, Alida Maria, Cerqueira Cesar São Paulo (BR)
(74) Representative: Monteiro Alves, Inês

(56) References cited:
- EP-A1- 1 872 657
- EP-A2- 2 323 946
- JP-A- 2002 195 453
- US-A- 5 064 170
- US-A- 5 360 172

## Description

### TECHNICAL FIELD

The present model discloses a fluid discharge valve endowed with a safety lock against accidental release, providing an increase in the durability of the components engaged in conjunction with the movement of activating the valve trigger.

### BACKGROUND OF THE MODEL

Fluid discharge valves are used on a large scale coupled to atomizers, sprayers and liquid-spraying agricultural equipment, among others.

These known devices are endowed with a body for the passage of fluid, a trigger with or without a safety lock against accidental release. By manually pressing the trigger, the passage of the body of the valve is open enabling the flow of fluid through the valve. Insofar as the trigger is at the hand of the equipment operator, accidental releases are a commonplace occurrence, causing environmental and health problems depending on the content of the liquid.

Therefore, a fluid discharge valve must contain a reliable and durable safety lock, capable of blocking the activation of the trigger, preventing accidental releases.

### DESCRIPTION OF THE STATE OF THE ART

Fluid discharge valves having simplified mechanisms without safety locks against accidental release are known in the state of the art. Further, more recently, it is possible to find some fluid discharge devices with safety locks against accidental release.

Notwithstanding the evolution of equipment safety regulations and, with this, the advent of some fluid discharge valves presenting certain components for activating safety functions, as a rule, locks/components for blocking release; said safety systems developed thus far always result in excessive strain on the valve components, chiefly the triggers, in the event of the commonplace inadvertent activation of said locks/blocks activated. These situations facilitate accelerated wear and breakage of components of the discharge valves, reducing the useful life of the valves and exposing the user and, the environment, to situations of risk, such as, leakages of products.

The document MU 7202017-2, entitled MONOBLOCK SPRAY COMMAND VALVE, refers to construction of a valve in a single body injected in suitable plastic material, housing the mechanism on the inside, in a combination that reduces the number of components to a minimum. However, the device claimed in MU 7202017-2 does not have a safety lock, therefore, the valve may disperse liquids by accident, causing environmental and health problems if the liquids are toxic or harmful.

The utility model MU 9001361-1, entitled DEVICE INTRODUCED INTO JOYSTICK, belonging to the same owner as the present utility model, presents a valve for manually controlling the basic functions for the correct and safe working (for operator and environment) of motorized back atomizers. The device claimed in MU 9001361-1 has a safety lock against accidental release. However, activating the safety lock by blocking the spindle of the valve, makes the trigger stiff but allows it to be pressed in a forced manner, without enabling the passage of liquid, and the action of forcing the trigger - which as already stated previously is a commonplace inadvertent occurrence in these valves -, especially when coupled to intensive-use manual equipment such as sprayers and atomizers used in agriculture, significantly reduces the durability of the component, which may cause accidents in the event of possible breakage, as already mentioned herein.

The document EP1872657A1 refers to a portable agricultural spray for use in small areas or those with difficult access, of the type which has a tank containing the liquid to be sprayed together with a pumping system and a spray rod connected to the tank. The agricultural spray also comprises a valve device, which has a safety block acting directly on a trigger, wherein this configuration also may result in a quicker wearing of the trigger.

Another valve is described in document US5064170A, entitled Sprayer shutoff valve. In short, the invention refers to a shut-off valve for use with a tank-type portable pressurized sprayer combination that prioritizes the safety of the user preventing fluid from leaking through the valve. Different to the present device claimed, the valve disclosed in US5064170A does not have safety clasps that prevent accidental release of the trigger.

The document JP2002195453A discloses a valve device comprising an internal lock pin and a trigger lever. Different to the present device claimed, the valve device disclosed in JP2002195453A does not reveal any feature or position of said lock pin that enables closing of the valve independently of moving the trigger lever.

### OBJECTIVE OF THE MODEL

The objective of the present invention is to provide a liquid discharge valve with a safety lock against accidental release and which provides an increase in the durability of the additional components in conjunction with the movement of activating the trigger of the valve and, consequently, a rise in the safety level of the design by reducing the possibilities of breakage of parts during use, a sought-after characteristic of major importance in the application of chemical substances with varied levels of environmental and human toxicity, as is the case of pesticides, which are commonly applied when using these types of valves.

### BRIEF DESCRIPTION OF FIGURES

Figure 1 illustrates a cut-off view of the valve of the present model.
Figure 2 illustrates a cut-off view in perspective of the liquid discharge valve.
Figure 3 illustrates a cut-off view in perspective of the liquid discharge valve with the safety lock displaced.

### DETAILED DESCRIPTION

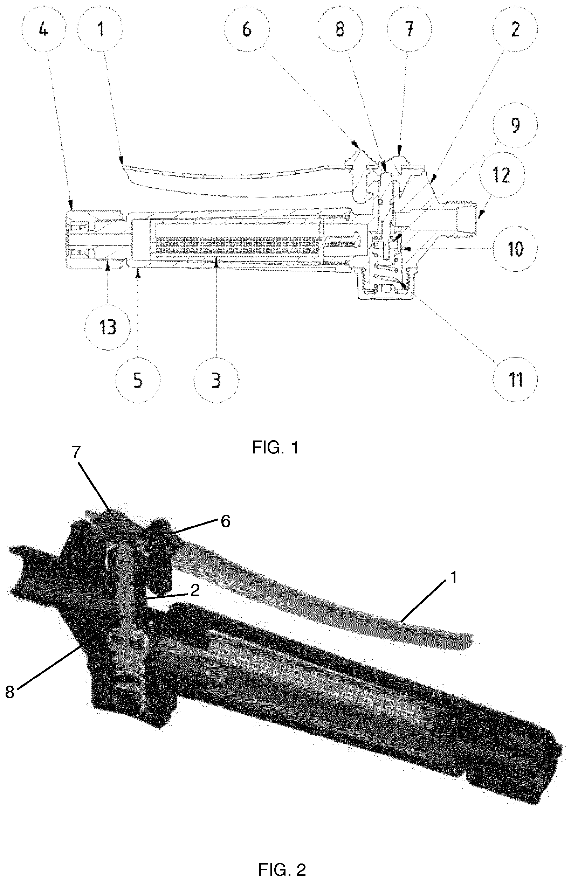

Figure 1 illustrates a cut-off view of the valve showing its components, namely the trigger (1), the body (2), the filter (3), the fastening bolt (4), the thread (13), the handle (5) of the valve, the open lock (6), safety lock (7), the pin (8) of the valve, the trim (9), the thread (12), the seat (10) and the spring (11).

Figure 2 illustrates a cut-off view in perspective of the valve, showing the pin (8) of the valve, the trigger (1), the body (2), the lock (6) and the safety lock (7).

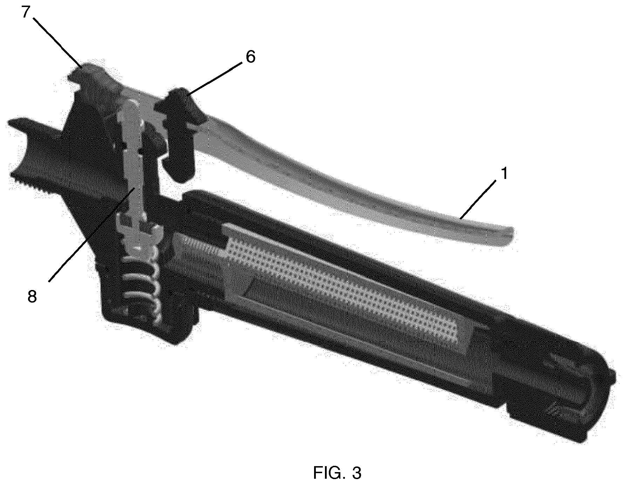

Figure 3 shows a cut-off view in perspective of the valve with the safety lock (7) displaced, illustrating the pin (8) of the valve, the trigger (1) and the lock (6).

The present liquid discharge valve is basically made up of a main body (2), to which most of the other components are fastened or connected. In the rear part of the body (2) there is fastened the trigger lever (1) and beneath it the handle (5) of the valve threaded to the body (2); in addition to acting as handle, it contains a removable filter (3) on the inside to help retain residues/impurities from the liquids and at its distal end a thread (13) for connecting the fastening bolt (4), which serves the purpose of fastening s liquid hose (not represented in the pictures) to be used during the application of this discharge valve. Additionally, at the other end of the combination, front part of the body (2) of the valve (2) there is a thread (12) which serves to connect the liquid discharge tubing systems (not represented in the figures). Mounted in the central and inner part of the body (2) are the pin components (8) of the valve, trim (9), seat (10) of the valve and spring (11) of the valve, which guarantee the interruption and the permission/opening of the passage of liquids from inside the handle (5) of the valve to the front outlet of the body (2) of the valve. In the upper part of the discharge valve and encased in a central opening at the front end of the trigger lever (1), there are two components, called open lock (6) and safety lock or closed (7) which are linearly mobile, the latter providing a differentiator and exclusive safety system which in conjunction with the function of blocking the activation of the trigger lever (1) preventing accidental applications of liquids, especially thinking about the use of applications of toxic substances, promotes an increase in the durability of the components activated jointly with the movement of pulling the trigger lever (1).

The opening of the passage of liquid occurs firstly by pressing the trigger lever (1), then simultaneously, the safety lock (7), which is fastened to the end of the trigger lever (1), downwardly pushes the pin (8) of the valve and the seat (10) of the valve, which is fastened to the pin (8), is moved together, pressing the spring (11). This movement also shifts the position of the trim (9) fastened just above the seat (10); accordingly, the trim (9) leaves its position of sealing the channel for the passing of the liquid existing in the body (2), enabling the clearance of the channel and free passage of the liquid through the entire body (2) of the valve.

The closure or interruption of the passage of liquid occurs automatically by ceasing to press the trigger lever (1), that is, by releasing it, because during this action the force of the spring (11) pushes the components, pin (8), trim (9) and seat (10) of the valve to their original position.

The functioning described above occurs, in this sequence, when the locks open (6) and safety lock (7) are not activated. However, by using the locks (6,7) two new modes of operating the discharge valve are enabled. As can be seen in Figure 2 , considering the use of the open lock (6), to activate it, first press the trigger lever (1) and then push the open lock (6) forwards, making its lower part encase and maintain position to a protruding part of the body (2) of the valve and its upper part encase maintaining position at a lowered part of the safety lock (7); accordingly, the opening of the passage of liquid is activated uninterruptedly, without the need for keeping the trigger lever (1) pressed, as the pin (8) of the valve is maintained and, all the components fastened thereto, pressed downwards. By pushing the open lock (6) again, now backwards, it is deactivated.

According to Figure 3 , to activate the safety lock (7), push it forwards until the component leaves the direction of the pin (8) of the valve. Therefore, the central opening of the trigger lever (1) is uncovered and the pin (8) of the valve overpasses this trigger lever (1). Consequently, the trigger lever (1) becomes loose and does not enable the opening of the passage of liquid, even if the lever (1) is pressed or the open lock (6) is activated. Generally, safety systems installed in manual discharge valves/triggers, known in the state of the art, actuate or promote the locking of the activation of the trigger lever (1) or, enabling the trigger lever (1) to be activated, but blocking the activation of the pin (8) and both situations facilitate accelerated wear and breakage of components of the discharge valves/triggers due to the fact that manual activation is commonplace, forcing the trigger lever (1), when the safety systems are activated, at a first moment, until the operator realizes and proceeds to deactivate. Said wear or breakages may lead to leakage of liquids under pressure, which in the case of toxic chemical products, will contaminate the environment and/or the operator of the discharge valve/trigger.

The differentiating factor in this safety system is that it means no component is forced when the lock (7) is activated, and the pin (8) of the valve is not moved/does not come into contact with any component, which raises the level of safety, reduces the risk of damage to the combination and consequently, contributes to increase the useful life of the combination and reduce the risk of contaminating the environment and the operator.

## Claims

1. A valve comprising:
- a main body (2);
- a trigger lever (1), which is fastened to a rear part of the main body (2);
- a handle (5), which is threaded to the main body (2), said handle (5) encasing a removable filter (3), and comprising, at its distal end, a thread (13) for connecting a fastening bolt (4);
- a thread (12) disposed at a front part of the main body (2) of the valve;
- a pin (8), a trim (9), a seat (10) and a spring (11) of the valve mounted in a central and inner part of the main body (2), wherein the seat (10) is fastened to the pin (8) and the trim (9) is fastened above the seat (10); **characterized in that** the valve further comprises an open lock (6) and a safety lock (7), which are linearly mobile and disposed at an upper part of the discharge valve and engaged to a central opening at a front end of the trigger lever (1);
wherein
when the safety lock (7) is in a deactivated position and the open lock (6) is in an activated position, the open lock (6) is encased to the main body (2) and the safety lock (7), and the open lock (6) pushes the safety lock (7) against the pin (8), which moves together with the seat (10), said movement shifting the position of the trim (9) and pressing the spring (11), enabling the free passage of liquid through the main body (2) of the valve, without the need for keeping the trigger lever (1) pressed;
and
when the safety lock (7) is in an activated position after being pushed until the safety lock (7) leaves the direction of the pin (8), the contact between the pin (8) and the trigger lever (1) is disabled, preventing the free passage of liquid through the main body (2) of the valve.

## Patentansprüche

1. Ein Ventil, bestehend aus:
- Einem Hauptkörper (2);
- Einem Auslösehebel (1), der am hinteren Teil des Hauptkörpers (2) befestigt ist;
- Einem Griff (5), der mit dem Hauptkörper (2) verschraubt ist, wobei der besagte Griff (5) einen abnehmbaren Filter (3) umschließt und an seinem distalen Ende ein Gewinde (13) zum Einbau eines Befestigungsbolzens (4) aufweist;
- Ein Gewinde (12), das an der Vorderseite des Hauptkörpers (2) des Ventils angebracht ist;
- Einem Stift (8), einer Blende (9), einem Sitz (10) und einer Feder (11) des Ventils, welche im mittleren und inneren Teil des Hauptkörpers (2) eingebaut sind, wobei der Sitz (10) mit dem Stift (8) verbunden und die Blende (9) oberhalb des Sitzes (10) befestigt ist; **dadurch gekennzeichnet, dass** das Ventil außerdem ein offenes Schloss (6) und ein Sicherheitsschloss (7) aufweist, die linear beweglich sind und an einem oberen Teil des Ablassventils angeordnet sind und in eine zentrale Öffnung am vorderen Ende des Auslösehebels (1) einrasten
worin
Wenn sich das Sicherheitsschloss (7) in einer deaktivierten Position befindet und das offene Schloss (6) die aktivierte Stellung einnimmt, wird das offene Schloss (6) im Hauptkörper (2) und im Sicherheitsschloss (7) eingeschlossen, und das offene Schloss (6) drückt das Sicherheitsschloss (7) gegen den Stift (8), der sich zusammen mit dem Sitz (10) bewegt, wobei die besagte Bewegung die Position der Blende (9) verändert und Druck auf die Feder (11) ausübt, wodurch der freie Durchfluss von Flüssigkeit durch den Hauptkörper (2) des Ventils ermöglicht wird, ohne die Notwendigkeit, den Auslösehebel (1) gedrückt zu halten;
und
wenn sich das Sicherheitsschloss (7) in einer aktivierten Position befindet, nachdem es betätigt wurde, bis das Sicherheitsschloss (7) die Richtung des Stifts (8) verlässt, wird der Kontakt zwischen dem Stift (8) und dem Auslösehebel (1) unterbrochen, wobei der freie Durchfluss von Flüssigkeit durch den Hauptkörper (2) des Ventils verhindert wird.

## Revendications

1. Une vanne comprenant :
- un corps principal (2) ;
- un levier de déclenchement (1), qui est fixé à une partie arrière du corps principal (2) ;
- une poignée (5), qui est vissée sur le corps principal (2), la dite poignée (5) renfermant un filtre amovible (3), et comprenant, sur son extrémité distale, un filetage (13) pour la connexion d'un boulon de fixation (4) ;
- un filetage (12) disposé sur une partie avant du corps principal (2) de la vanne ;
- une broche (8), une garniture (9), un siège (10) et un ressort (11) de la vanne montés dans une partie centrale et interne du corps principal (2), dans lequel le siège (10) est fixé à la broche (8) et la garniture (9) est fixée au-dessus du siège (10) ; **caractérisée en ce que** la vanne comprend en outre un verrou ouvert (6) et un verrou de sécurité (7), qui sont mobiles de manière linéaire et disposés sur une partie supérieure de la vanne de décharge et engagés vers une ouverture centrale sur une extrémité avant du levier de déclenchement (1) ;
dans laquelle
lorsque le verrou de sécurité (7) est dans une position désactivée et que le verrou ouvert (6) est dans une position activée, le verrou ouvert (6) est enfermé dans le corps principal (2) et le verrou de sécurité (7), et le verrou ouvert (6) pousse le verrou de sécurité (7) contre la broche (8), qui se déplace ensemble avec le siège (10), ledit déplacement changeant la position de la garniture (9) et pressant le ressort (11), en permettant le libre passage de liquide à travers le corps principal (2) de la vanne, sans avoir besoin de conserver le levier de déclenchement (1) pressé ;
et
lorsque le verrou de sécurité (7) est dans une position activée après avoir été poussé jusqu'à ce que le verrou de sécurité (7) quitte la direction de la broche (8), le contact entre la broche (8) et le levier de déclenchement (1) est désactivé, empêchant ainsi le passage libre de liquide à travers le corps principal (2) de la vanne.
